# EUROPEAN PATENT SPECIFICATION

(11) **EP 0 549 379 B1**
(45) Date of publication and mention of the grant of the patent: **10.09.1997**
(21) Application number: 92311847.5
(22) Date of filing: 29.12.1992
(51) Int. Cl.: C09D 195/00, C08K 5/00, C08L 95/00

(54) **Improvers for adhesion of asphalt to aggregates**
Haftverbesserer für Haftung von Asphalt an Aggregaten
Améliorateurs pour adhésion d'asphalte aux agrégats

(30) Priority: 27.12.1991 US 815835
(43) Date of publication of application: 30.06.1993
(73) Proprietor: Sawatzky, Henry, Ottawa, Ontario K1H 5M3 (CA); Clelland, Floyd Ian, Renfrew, Ontario K7V 3Z5 (CA); Farnand, Brian Anthony, Nepean, Ontario K2G 5R3 (CA); Houde, Jean Jr, Gatineau, Quebec J8V 2KR (CA)
(72) Inventor: Sawatzky, Henry, Ottawa, Ontario K1H 5M3 (CA); Clelland, Floyd Ian, Renfrew, Ontario K7V 3Z5 (CA); Farnand, Brian Anthony, Nepean, Ontario K2G 5R3 (CA); Houde, Jean Jr, Gatineau, Quebec J8V 2KR (CA)
(74) Representative: Harrison, Michael Robert

(56) References cited:
- CA-A- 1 225 062
- US-A- 3 928 061

## Description

### Technical Field to which the Invention Belongs

This invention relates to a novel agent for improving the adhesion of asphalt to aggregate and to the improved asphaltic concrete so formed.

### Related Background Art

The use of asphalt in the production of road-making materials is well known. The asphalt material acts as a binder for solid aggregates. Typical solid aggregates which have been employed include stone, gravel and slag.

Road construction has many variations. Asphaltic concrete can be used for the entire road bed or just for the surface. Asphaltic concrete, particularly at the road surface, has considerable advantages over other materials particularly due to its elasticity and compliance. However, asphaltic concrete does deteriorate with time and heavy traffic. Deterioration can be accelerated by way of weakening of the asphaltic concrete due to the stripping of asphalt cement from the aggregate by moisture.

The quality of the aggregate is also important. A number of materials with appropriate size distribution can serve as aggregates; among these are sand, lime-stone, slag, lime, vulcanized rubber, or ground and screened coke obtained by any known method from coal or oil. A mixture of aggregates can also be used. The susceptibility to stripping can vary considerably for different aggregates.

An asphaltic cement satisfactory for use as a bonding and coating agent for mineral aggregate should have the following properties: it should be able to coat completely the aggregate; it should have such adhesive qualities that the adhesion between the asphalt and the aggregate is not disrupted in the presence, or because, of water or by variations in climatic conditions; it should provide the pavement with a certain amount of resiliency and a high coefficient of "rehealing"; and it should so resist oxidation that the pavement retains its rehealing characteristic over a long period of time, the ideal asphaltic concrete being one in which the asphaltic cement is as soft as possible and yet has the capacity of resisting being deformed by traffic shocks and impacts.

According to the current state of the art, most of the asphaltic concrete road construction involves hot mixing and paving while the mixture is hot. However, paving can also involve mixtures containing emulsified or "cut-back" asphalts.

It is well known that asphalt can have poor adhesion to aggregate in the presence of water. Aggregate can be preferentially wetted by water, so that even if the aggregate was dry at the time it was blended with the asphalt, in the course of time the penetration of water into the asphalt composition reaches the aggregate and then interferes with the bond between the aggregate and the asphalt, leading to separation of the asphalt from the aggregate, with resulting breakup of the composition.

Asphalt compositions used in asphalt pavings are viscous semi-solid materials. In order to apply these materials to a surface, it is necessary first to convert them to a temporarily fluid state, e.g., by lowering the viscosities by heating, or by production of emulsions or by cutting back with liquid hydrocarbons.

The adhesion between asphalt and aggregate is known to be improved by the addition of a basic substance, e.g., an amine, thereto. The result is an increased pavement life.

Examples of some basic additives which have been used in the past for this purpose include the primary alkyl amines, e.g., lauryl amine, stearyl amine, and the alkylene diamines, particularly the alkyl-substituted alkylene diamines, e.g., N-stearyl-1,3-propylene diamine. Amides are also used in some anti-stripping formulations. The production of these additives involves considerable costs.

Many patents have proposed the use of such anti-stripping agents in asphalt/aggregate mixture to provide road surfacing composition. Among them are the following:
Canadian Patent No. 425,128, patented January 16, 1945;
Canadian Patent No. 481,806, patented August 18, 1952 by F. C. Gzemski;
Canadian Patent No. 986,256, issued March 30, 1976 by M. E. Hellsten et al;
U.S. Patent No. 2,336,468, patented December 14, 1943 by W. G. Cole et al;
U.S. Patent No. 2,416,134, patented February 18, 1947 by W.W. Allen;
U.S. Patent No. 3,085,891, patented April 16, 1967;
U.S. Patent No. 3,868,263, patented February 25, 1975 by K. E. McConnaughey;
U.S. Patent No. 4,325,738, patented April 20, 1982 by H. Plancher et al;
U.S. Patent No. 4,765,839, patented August 23, 1988 by D. S. Treybig et al;
U.S. Patent No. 3,928,061, patented December 23, 1971 by M. E. Hellsten et al; and
U.S. Patent No. 4,038,102, patented July 26, 1977 by M. E. Hellsten et al.

### Disclosure of the Invention

This invention provides a bituminous coating composition including an asphalt, a bitumen asphalt or a crude residuum containing asphaltenes, and an amount of from 0.1% to 8% by weight, of a nitrogen-containing, adhesion-improving, anti-stripping agent, characterised in that said agent is a sewage sludge-derived oil, or a fraction thereof, said sewage sludge-derived oil comprising a mixture of saturated aliphatic hydrocarbons, monoaromatic hydrocarbons, diaromatic hydrocarbons, polyaromatic hydrocarbons, polar compounds and basic, pyridine-soluble compounds having the following elemental composition, in per cent by weight:

| | |
|---|---|
| Nitrogen | 2 - 8% |
| Oxygen | 3 - 12% |
| Sulphur | 0.1 - 4% |
| Hydrogen | 9 - 11% |
| Carbon | 65 - 89.9% |

This invention also provides a bituminous paving composition including aggregate, an asphalt, a bitumen asphalt or a crude residuum containing asphaltenes, and an amount of from 0.1% to 8% by weight, of a nitrogen-containing, adhesion-improving anti-stripping agent, characterised in that said agent is a sewage sludge-derived oil, or a fraction thereof, said sewage sludge-derived oil comprising a mixture of saturated aliphatic hydrocarbons, monoaromatic hydrocarbons, diaromatic hydrocarbons, polyaromatic hydrocarbons, polar compounds and basic, pyridine-soluble compounds, having the following elemental composition, in per cent by weight:

| | |
|---|---|
| Nitrogen | 2 - 8% |
| Oxygen | 3 - 12% |
| Sulphur | 0.1 - 4% |
| Hydrogen | 8 - 11% |
| Carbon | 65 - 86.9% |

This invention further provides an asphalt composition including an asphaltic cement, and an amount of from 0.1% to 8% by weight, of a nitrogen-containing, adhesion-improving, anti-stripping agent characterised in that said agent is a sewage sludge-derived oil, or a fraction thereof, said sewage sludge-derived oil comprising a mixture of saturated aliphatic hydrocarbons, monoaromatic hydrocarbons, diaromatic hydrocarbons, polyaromatic hydrocarbons, polar compounds and basic, pyridine-soluble compounds, having the following elemental composition, in per cent by weight:

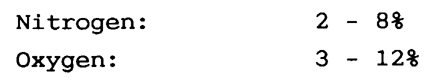

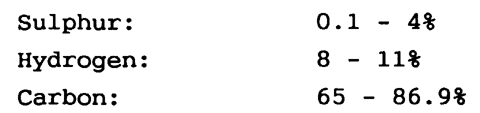

The sewage sludge-derived oil used in the above characterisations of the invention preferably has the following elemental composition: nitrogen 3.4% to 5% by weight; oxygen, 5.8% to 6% by weight; sulphur, 0.3% to 0.8% by weight; hydrogen, 9.70% to 10.4% by weight; and carbon, 76.9% to 79.8% by weight.

The sewage sludge-derived oil used in the above characterisations of the invention more preferably has the following elemental composition: nitrogen 3.42% to 4.95% by weight; oxygen, 5.84% to 6.89% by weight; sulphur, 0.34% to 0.83% by weight; hydrogen, 9.70% to 10.44% by weight; and carbon, 76.92% to 79.76% by weight.

The amount of such sewage sludge-derived oil used in the above characterisations of the invention is preferably from about 1% to about 5% by weight.

### Effects of the Invention

The principal effect of this invention is that an improved resistance to stripping is achieved. In addition, the nitrogen-containing additive provides improvements in the adhesion of the asphalt to aggregates. This effect which is achieved, is at least as great as individual effects, i.e., either improvements in adhesion, or resistance to stripping, using the additives taught by the background art. Yet, by the present invention, these two effects are achieved simultaneously.

The aggregate employed herein in the development of the present invention was selected as being prone to stripping in order to demonstrate the effectiveness of the sewage sludge-derived oil, fractions thereof, as anti-stripping agents, as well as the effectiveness of commercial anti-stripping agents for comparison. The aggregate was obtained from a quarry in Renfrew County in Ontario, Canada, designated by the Ministry of Transportation of Ontario as permissible for use in road compositions only when used with an adhesion improver.

The bituminous material which may be employed herein in the practice of the present invention is not critical. Any bitumen, asphalt or crude residuum containing asphaltenes can be employed. In general, the asphalt which can be employed is conventional petroleum asphalt. The asphalt cement requirement is set forth in ASTM D 3381-83 and D 946-82, the standard specifications for VISCOSITY-GRADED and PENETRATION-GRADED ASPHALT CEMENTS FOR USE IN PAVEMENT CONSTRUCTION, respectively. Preferred asphalts are the normal paving asphalts (e.g., AC5, AC10, AC20, and AC30, where AC indicates asphalt cement and the number indicates the viscosity at 140°F. in poises divided by 100, and penetration graded asphalt, designated according to their penetration ranges (dmm) obtained at 25°C, 100g, 5 sec. In Canada the most common grades are 85/100 and 150/200.).

The sewage sludge-derived oil used in the present invention may be produced according to the teachings of Canadian Patent No. 1,225,062, issued August 4th, 1987, to T. R. Bridle. The teachings of such a patent may be summarized as follows:

A batch-type reaction system for the production of such sludge-derived oil described in the above-identified Canadian patent may be operated as follows: A single reactor provides both heating and reaction zones and consists of a PYREXT_{TM} tube. This was heated in a furnace, off-gases being condensed in a trapping system consisting of three flasks connected in series, using ice as the coolant. Non-condensable gases (NCG) were vented by pipe from the system to a furnace hood and were not collected. A typical run was conducted by charging 550 g of dried sludge (93-96% solids) into the reactor and deaerating with nitrogen while in the vertical position. The reactor volumetric packing for all runs was a nominal 50%. The reactor was then placed in the furnace, which was inclined by a support 10° to facilitate liquid transport. All the lines, traps, etc. were connected and the entire system purged with nitrogen (15 mL/s) for 20 to 30 minutes. The furnace was then switched on and brought up to operating temperature at a controlled rate, the control employing a thermocouple placed in the sludge bed and connected to thermocouple switch and readout. Once operating temperature had been reached, the nitrogen purge rate was reduced to 7 mL/s. When all visible signs of reaction, i.e., gas/oil flow, ceased the heat was switched off and the nitrogen purge rate increased to 15 mL/s for approximately 30 minutes. The system was dismantled and the char, oil and pyrolytic water collected and stored for analyses, oil/water separation being achieved using a separatory funnel.

The operating conditions and results for a continuous-type reactor system are shown in Table 1 below, while typical elemental analyses of the resultant oils and chars are shown in Table 2 and a distribution analysis of aliphatic hydrocarbons found in an oil is shown in Table 3. The continuous reactor results are shown in Table 4. All the data in the tables is expressed on a total solids basis (not corrected for volatiles). The non-condensable gas (NCG) yield was calculated by difference. Analysis of the NCG, by gas chromotography (GC), indicated that it contained roughly 6% methane and 10% carbon monoxide with the remainder comprising mostly carbon dioxide and nitrogen. The calculated calorific value is approximately 2.0 MJ/kg of NCG.

Most of the test runs were conducted at optimum conditions defined as: optimum conversion temperature as determined by differential scanning calorimetry; linear increase of temperature with time to operating temperature at 10°C/minute; and continuous nitrogen purge. Runs 11, 12, 13, 22, 24 and 19 instead were conducted with one variable altered during each test, as indicated in Table 1.

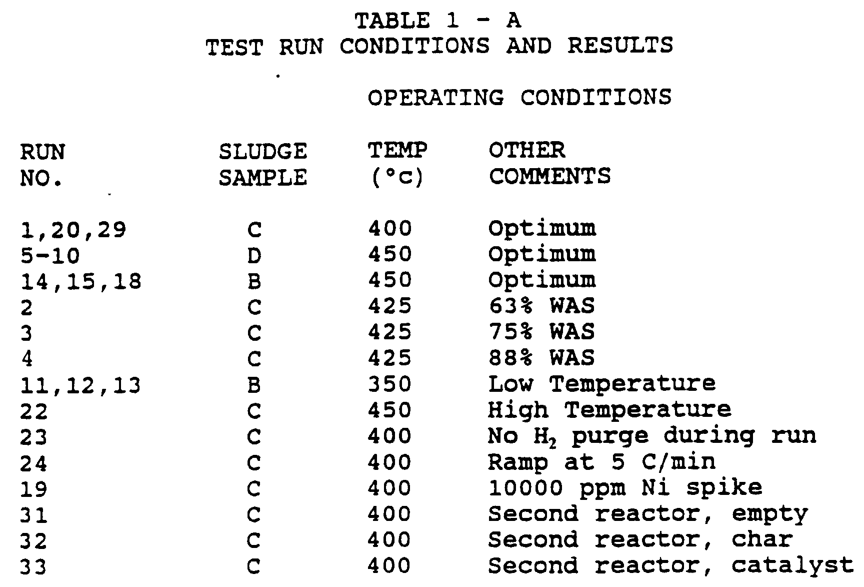

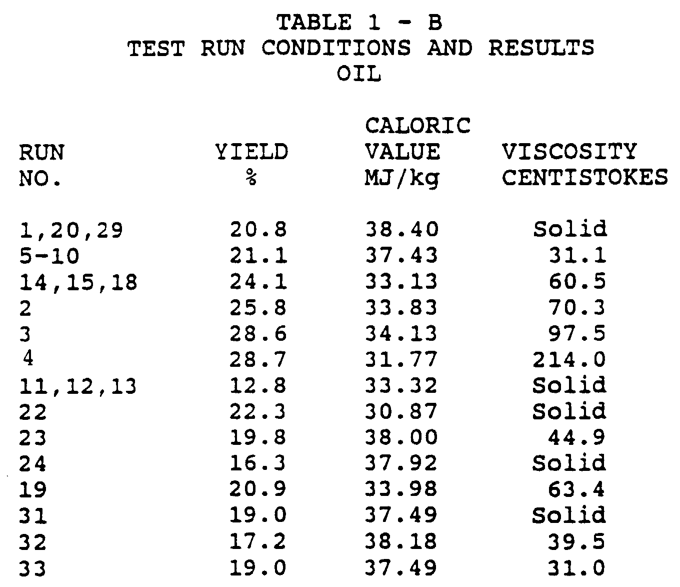

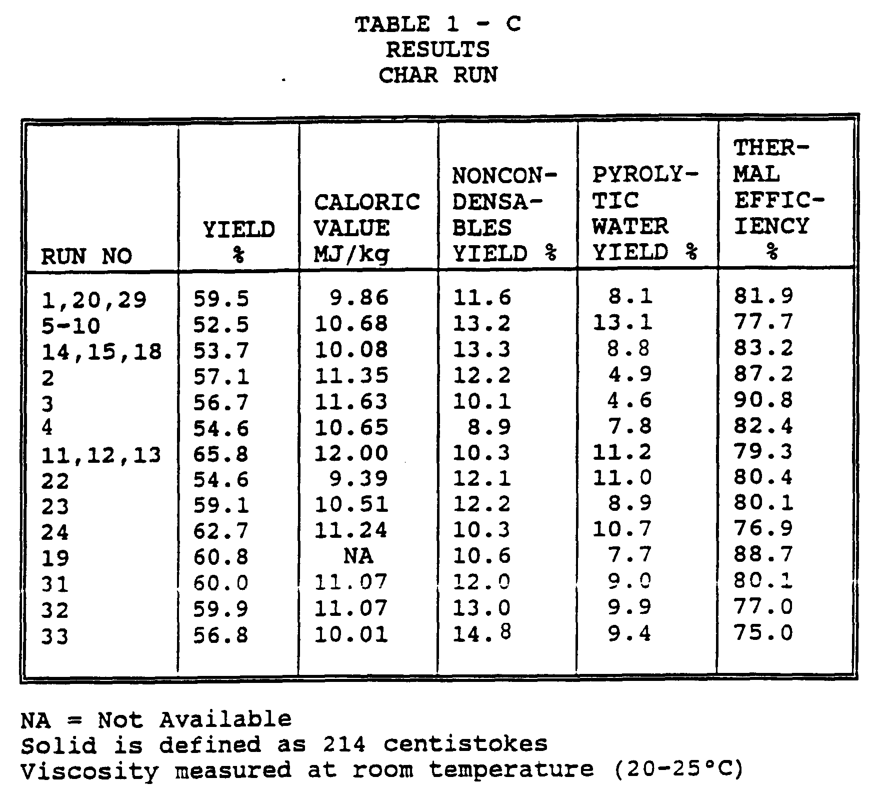

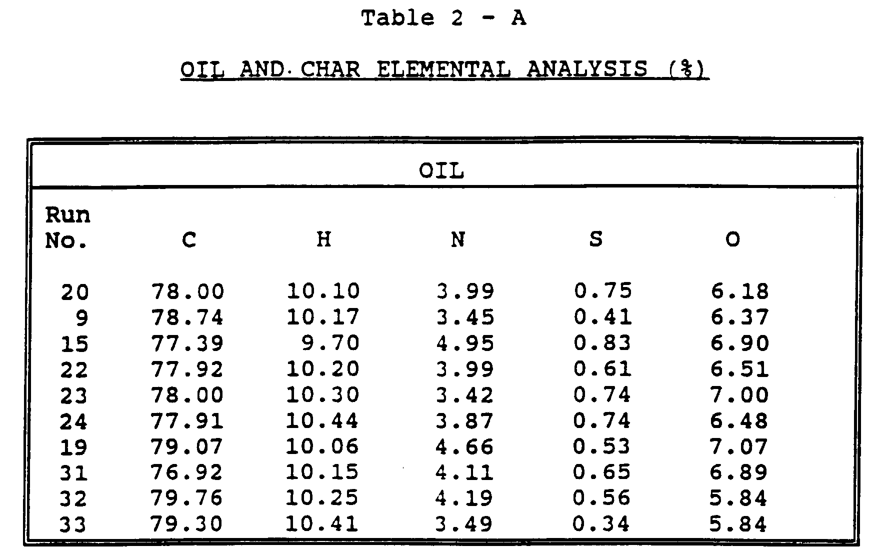

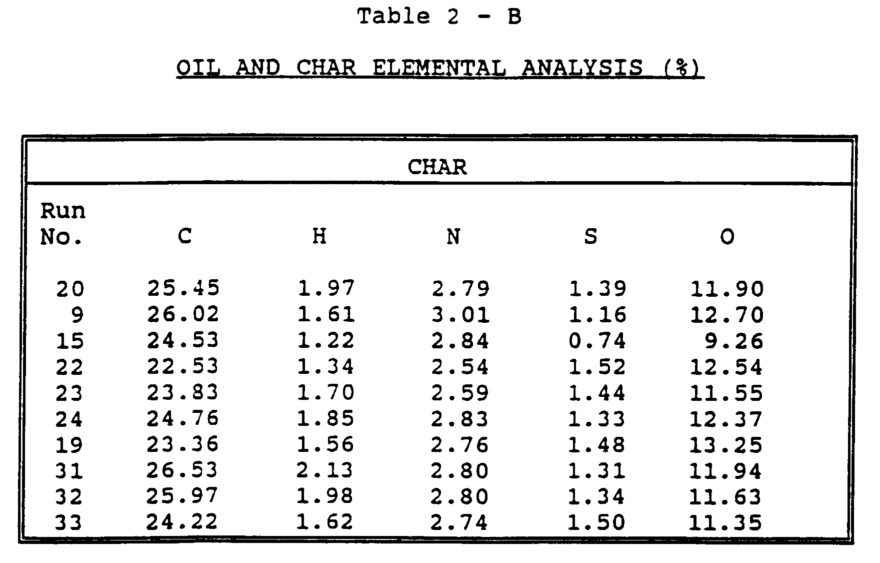

**Table 3**

| ALIPHATIC HYDROCARBON DISTRIBUTION IN OIL | |
|---|---|
| Compound | % |
| C₁₀ | 8 |
| C₁₀₋₁₅ | 30 |
| C₁₅₋₁₆ | 6 |
| C₁₆₋₁₇ | 5 |
| C₁₇₋₁₉ | 10 |
| C₁₉₋₂₀ | 10 |
| C₂₀₋₂₁ | 10 |
| C₂₁ | 21 |
| | $\overline{\text{100}}$ |

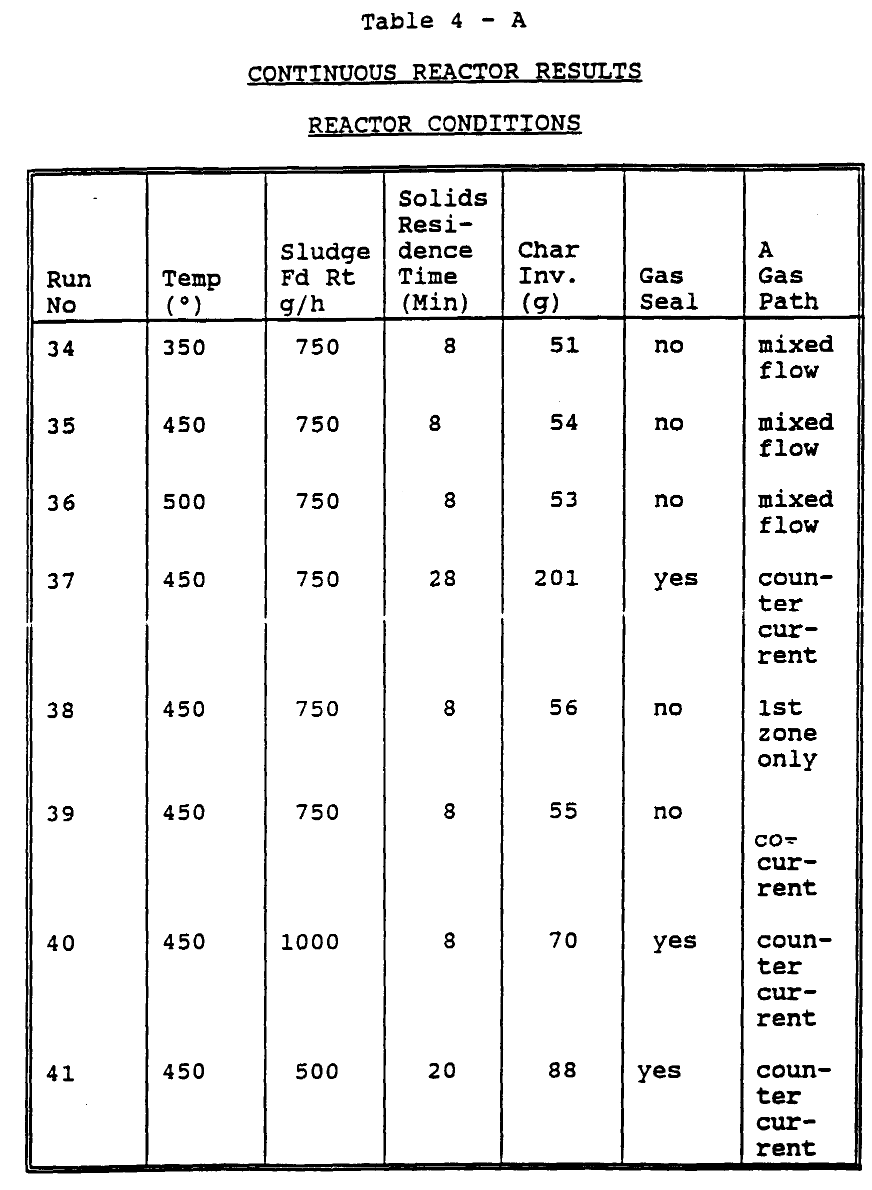

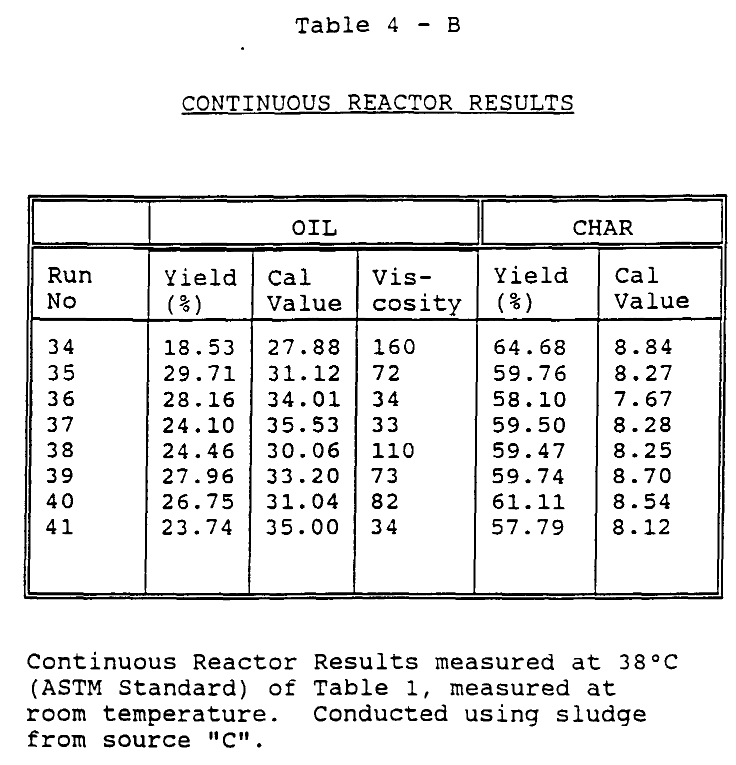

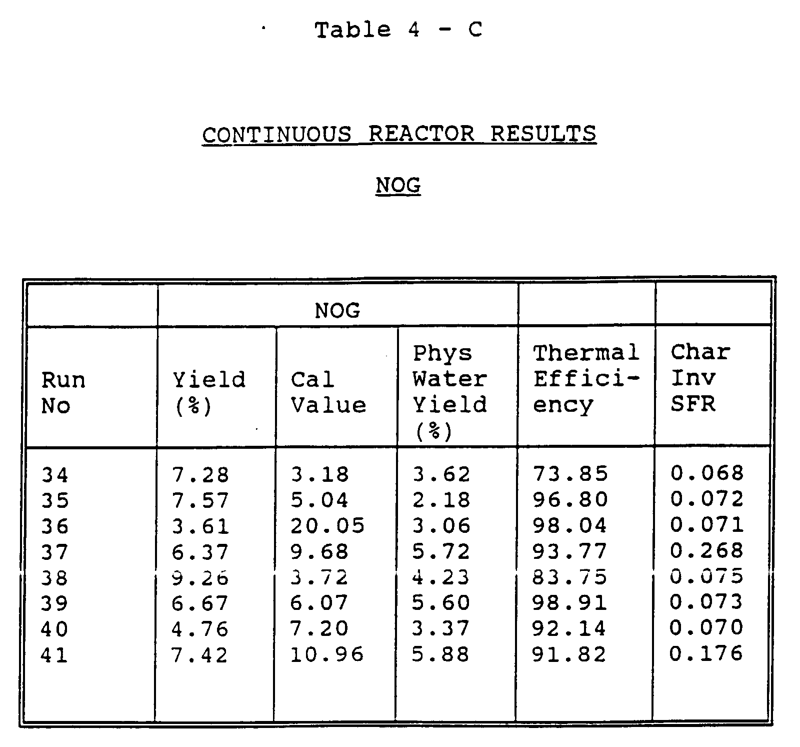

The sewage sludge-derived oil produced appears to be largely aliphatic with a moderate oxygen content but with nitrogen derived from proteins and fatty acid in the sewage sludge. The solid residue is 80% inorganic matter.

The above-described sewage sludge-derived oils may have the following composition:

**Table 5**

| | General Range | Typical Range |
|---|---|---|
| Nitrogen | 2% to about 8% | 3.4% to about 5% |
| Oxygen | 3% to about 12% | 5.8% to about 6.9% |
| Sulphur | 0.1% to about 4% | 0.3% to about 0.8% |
| Hydrogen | 8% to about 11% | 9.7% to about 10.4% |
| Carbon | 86.9% to about 65% | 76.9% to about 79.8% |

These sewage sludge-derived oils can be dehydrated by distillation. Portions of the nitrogenous groups appear to be amines and amides with some pyridinic and pyrrolic types. Portions of the oxygen-containing groups appear to be carboxylic and amide types.

The following Table 6 provides an identification of individual components of sewage sludge-derived oil (SDO) by Gas Chromotography/Mass Spectrograph (GC/MS):

**Table 6**

| Components | Approximate concentration in Fraction | Approximate concentration in dehydrated sewage sludge-derived oil |
|---|---|---|
| Fraction 1 (boiling: up to 176°C) | (4.6% of dehydrated sewage sludge-derived oil) | |
| Low boiling aromatics | 15.3% | 0.7% |
| Pyridines | 1.1% | 0.05% |
| Total Alkanes | 2.5% | 0.12% |
| Indoles | 1.7% | 0.08% |
| Pyrroles | 1.1% | 0.05% |
| Thiocyanates | traces (i.e. less than 0.05%) | |
| Esters | traces (i.e. less than 0.05%) | |
| | | |
| Fraction 2 (boiling range: 176°-260°C) | (22.5% of dehydrated sewage sludge-derived oil) | |
| Phenols | 3.2% | 0.7% |
| Pyrroles | | |
| Esters/acids | | |
| Succinimide (C₅H₇NO₂) | | |
| Amides | traces (i.e. less than 0.05%) | |
| Thioureas | traces (i.e. less than 0.05%) | |
| Thiazoles | traces (i.e. less than 0.05%) | |
| | | |
| Fraction 3 (boiling range: 260-400°C) | (30.6% of dehydrated sewage sludge- derived oil) | |
| CₙH₂ₙ₋₁NO | | |
| CₙH₂ₙ₋₁N. | | |

It was found that, as the fractions get heavier, the identification of individual components becomes more difficult because of the complexity of the fraction.

The actual analysis (by elements) of this SDO is

| | |
|---|---|
| N | 6.77% |
| O | 11.21% |
| S | 0.74% |
| H | 9.75% |
| C | 71.53% |

An analysis of one specific sewage sludge-derived oil was carried out by gas chromatograhy/mass spectroscopy as follows:

This analysis is performed by connecting a mass spectometer to the outlet of a column used in a gas chromatograph. The sample is injected into the gas chromatograph which serves to divide the sample into individual components. Components of a sample are eluted from the column according to their differing volatilities, with the lowest boiling components usually eluting first. These are then passed to the mass spectrograph which causes the molecules to be fragmented and ionized. The ions of the different mass fragments of the component are detected electronically. The pattern of fragmentation as the ions move through a magentic field is then used to identify the chemical functional groups of the component. This is repeated for each component that is eluted from the chromatographic column. The patterns of the ion fragments are very well known for chemical functional groups and can be used for both identificationd and quantitative analysis. As the boiling range of the fraction increases the identification of individual components becomes more difficult because of the complexity of the components and the decreasing ability to resolve individual components by gas chromatography.

The samples of sewage sludge-derived oil were characterized by first distilling to obtain 5 fractions suitable for gas chromatography/mass spectrometry analysis. Each of these fraction was then analyzed to determine the amount of each functional type of component. The results are shown in the following Table 7, where the concentration reported represent the amount of the component type in the particular fraction only.

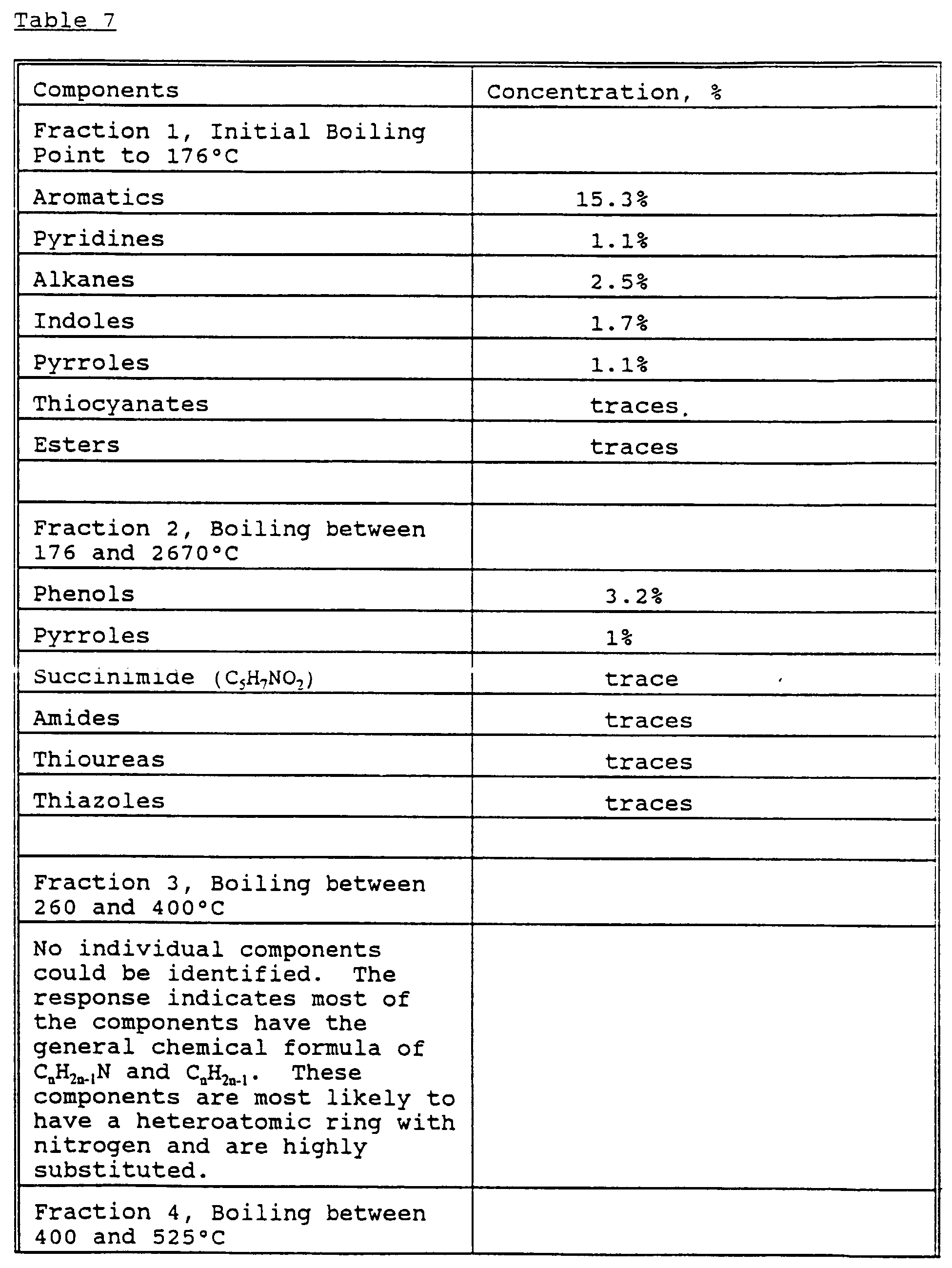

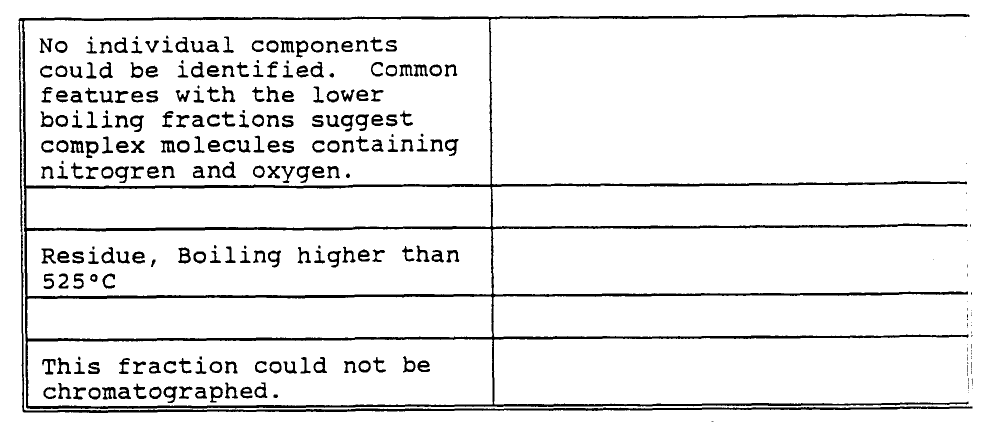

Consequently, it is seen that the sewage sludge-derived oil comprises a mixture of saturated aliphatic hydrocarbons, carbons, monoaromatic hydrocarbons, diaromatic polyaromatic hydrocarbons, polar compounds and basic, pyridine-soluble compounds. Large portions of the nitrogenous groups appear to be amine and amides with some pyridinic and pyrrolic types. Large portions of the oxygen containing groups appear to be carboxylic and amide types. The sewage sludge-derived oil has the following typical elemental composition: nitrogen, about 3.4% to about 5% by weight; oxygen, about 5.8% to about 6.9% by weight; sulfur, about 0.3% to about 0.8% by weight; hydrogen, about 9.7% to about 10.4% by weight; and carbon, about 76.9% to about 79.8% by weight. The sewage sludge-derived oils can be dehydrated by distillation.

The following standard test methods were used for determining the properties of the asphalt blends, according to this invention, containing sewage sludge-derived oil fractions:

The Standard Test Method for Penetration of Bituminous Materials is ASTM D5-86.

The Standard Test Method for Softening Point of Bitumen (Ring-and-Ball Apparatus) is ASTM D 36-86.

The Standard Test Method for Effect of Heat and Air in Asphaltic Materials (Thin-Film Over Test) is ASTM D1754-87.

The Standard Test Method for Ductility of Bituminous Materials is ASTM D 113-86.

The Standard Specification for Penetration-Graded Asphalt Cement for Use in Pavement Construction is ASTM D 946-82.

The Standard Test Method for Solubility of Asphalt Materials in Trichloroethylene is ASTM D 2042-81.

Standard Test Method for Kinematic Viscosity of Asphalts (Bitumens) is ASTM D 2170-85.

Standard Test Method for Viscosity of Asphalts by Vacuum Capillary Viscometer is ASTM D 2171-88.

The Standard Test Method for Separation of Asphalt into Four Fractions is ASTM D4124-86.

The Standard definitions of terms relating to materials for roads and pavements are given in ASTM D8-88.

Stripping by static immersion is described by Ministry of Transportation of Ontario (MTO).

The materials used were as follows:

Distillation fractions of sewage sludge-derived oils: +150°C, +250°C, +350°C, +400°C; Shell, Gulf, and Petro Canada 85/100 Pen grade asphalt, and Petro Canada 150/200 Pen grade asphalt.

The sewage sludge-derived oils used have the compositions as previously described.

Certain conventional anti-stripping agents were also used as a comparison, namely the following:

### 1) NALCLAD RL-2A

NALCLAD RL-2A may be defined as follows: NALCLAD is the trade-mark of Alchem Inc. for its brand of asphalt anti-stripping agent. It is composed of heavy aromatic naphtha, ethylene glycol monoethylether and tetraethylene pentaamine. It is a block, clear/hazy liquid with an aromatic odour. Its specific gravity is 0.94 at 25°C, and is reported to be oil soluble.

### 2) ALKAZINE O

ALKAZINE O is the trade-mark of Alkaril Chemicals Ltd. for its brand of fatty hydroxyethyl imidazoline, namely 1H-Imidazole-1-ethanol, 2-(8-heptadecenyl)-4,5-dihydro-, (Z)-; C₂₂H₄₂N₂O MW = 355.
Chemical Identity
Oleic hydroxyethyl imidazoline
Oleic aminoethyl ethanolamide
Physical state: Liquid
Appearance and odour: Amber, viscous liquid. Mild odour.
Specific gravity: 0.94 pH 10.0-11.5 (10% in D.W.) Density (g/ml): 0.94 Water solubility: Dispersible in water.

### 3) REDICOTE AP

REDICOTE AP is the trade-mark of Akzo Chemicals Ltd. for its brand of asphalt peptizing agent. Its characteristics are as follows:
Initial Boiling Point - >300°C>572°F @ 760 mmHg
Melting/Freezing Point - -20°C ∼68°F
Specific Gravity (H₂O = 1) 0.957 @ 25°C
Water Vapor Pressure (mmHg) - <0.1 @ 20°C
Solubility in Water (1% by weight) - Insoluble
% Volatiles by weight - ∼1
Evaporation Rate - (Butylacetate = 1) < 1
Appearance & Odor - Amber liquid with a slight aromatic odor.
Flash Point - >204°C >400°F
Test Method - PMCC

REDICOTE AP modifier is a cationic asphalt peptization agent which, when added to molten asphalt improves the emulsification and aging properties of the asphalt. REDICOTE AP modifier is adsorbed by the asphaltene constituent of asphalt, causing asphaltene agglomerates to be reduced in size and to be more evenly distributed throughout the continuous malthene phase.

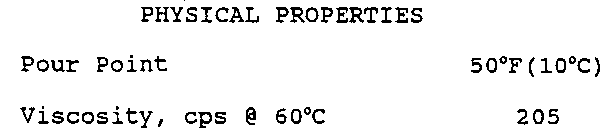

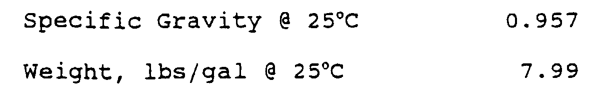

### 4) REDICOTE 82-S

REDICOTE 82-S is the trade-mark of Akzo Chemicals Ltd. for its brand of tallow alkylamine.
Initial Boiling Point - 171°C @ 760 mmHg
Melting/Freezing Point - 0°C
Specific Gravity (H₂O = 1) - 0.841 @ 25°C
Water Vapor Pressure (mmHg) - <1 @ 20°C
Solubility in Water(% By Weight) - Insoluble
Evaporation Rate - (Butylacetate = 1) < 1
Appearance & Colour - Amber liquid with a petroleum solvent odour
Flash Point - 89°C
Test Method - PMCC

The properties of REDICOTE 82-S are as follows:

| | |
|---|---|
| Pour Point °C | 0.3 |
| Flash Point, Pensky-Martens, °C | 89.0 |
| Viscosity, cps @ 60°C | 56.3 |
| Appearance @ 25°C | Opaque liquid |
| Specific Gravity @ 25°C | 0.841 |
| Weight, lbs/gal @ 25°C | 7.00 |

As a comparison the following anti-stripping test data is provided for treated asphalt cement held @ 250°F for 4 weeks:

| | |
|---|---|
| REDICOTE 82-S % | 0.3-0.75 |
| Asphalt type | 85/100 Pen. |
| Aggregate Type | Limestone; quartz Mass, rhyolite; Penn, whitehaven |
| Initial Coating % | 100 |
| Static Immersion Test (Modified), % stripped | approx. 1.0-7.0 |

The component type analysis of the asphalt blends used in this invention are shown on the next page in Table 8:

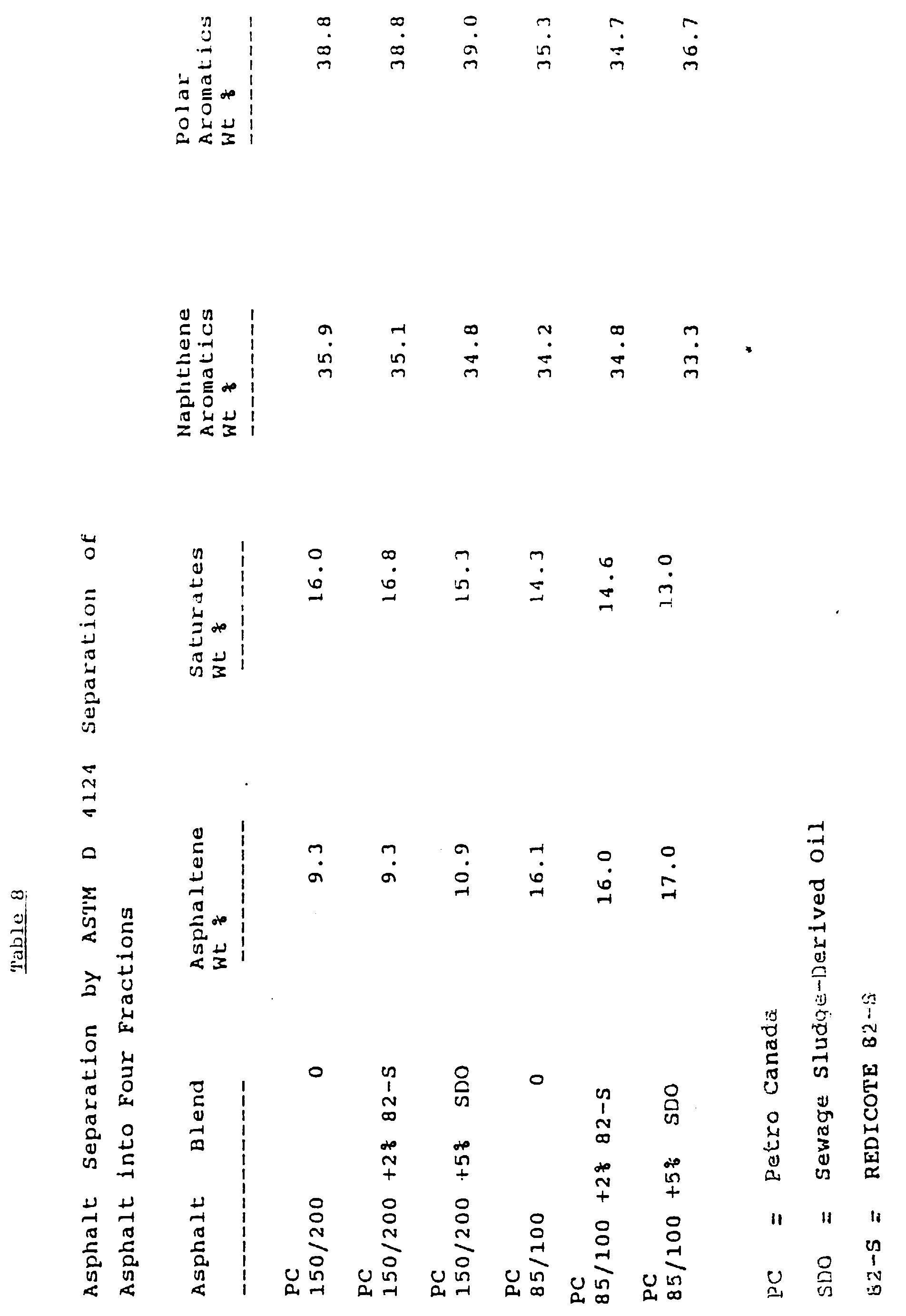

### Brief Description of the Drawings

In the accompanying drawings,
Figure 1 is a graph of the anti-stripping tests with retained coating in %, as ordinate and sewage sludge-derived oil in asphalt, in %, as abscissa;
Figure 2 is a graph of the static immersion stripping tests with retained coating in %, as ordinate and blend of anti-stripping agent as asphalt, in %, as abscissa; and
Figure 3 is a graph of the retained coating tests with retained coating in % as ordinate, and SDO in asphalt, in %, as abscissa.

### Description of Special Embodiments

The improvements in resistance to stripping, using Jaimeson aggregate in every case, are illustrated in Examples 1 to 4.

### EXAMPLE 1

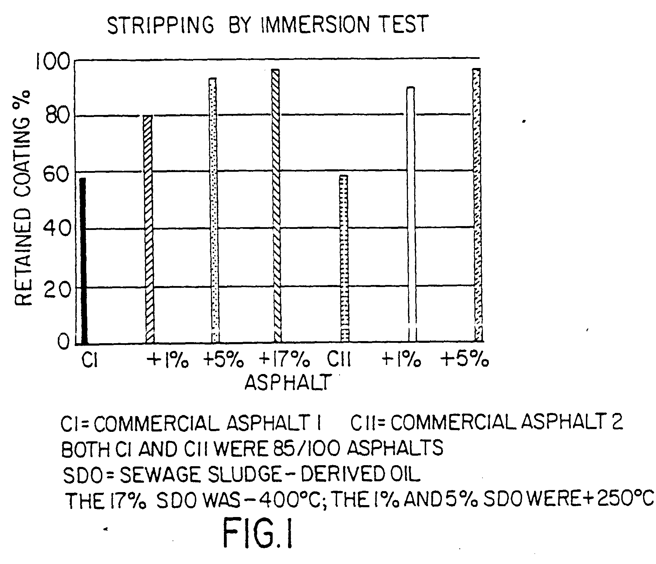

The resistance to stripping of an asphaltic composition of an aspect of this invention is summarized in the bar graph designated Figure 1.

In the tests above, the 17% sewage sludge-derived oil was +400°C; the 1% sewage sludge-derived oil and 5% sewage sludge-derived oil were +250°C. As seen in the Figure 1, 1%, 5% and 17% of sewage sludge-derived oil was added to an asphalt cement which initially coated only 57% of the aggregate surface after the stripping test. With the addition of the sewage sludge-derived oil (1%, 5% and 17% by weight) the amount of coverage was raised to 80%, 92% and 95%, respectively. In the case of +250°C sewage sludge-derived oil, 1% raised the coverage to 89% and 5% of sewage sludge-derived oil raised it to 96%. A minimum coverage of 95% is required by the Ministry of Transport for Ontario Protocol.

### EXAMPLE 2

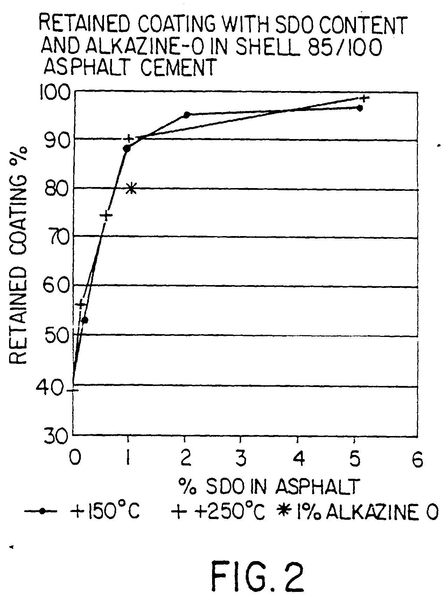

An anti-stripping test was carried out using Shell 85/100 asphalt with either +150°C sewage sludge-derived oil, or +250°C sewage sludge-derived oil or ALKAZINE O_{TM}. The graphical results of such anti-stripping test is shown in Figure 2.

The coverage of aggregate after the stripping test for the asphalt alone was 38%. When 0.1% amount of each of +150°C sewage sludge-derived oil and 250°C sewage sludge-derived oil were added, the coverage was raised to 55% in both cases; 0.5% of both sewage sludge-derived oil fractions increased it to 74%; and 1% increased it to 90%. 2% addition of the +150°C sewage sludge-derived oil increased coverage to 95%. 5% addition of both sewage sludge-derived oil fractions increased coverage to 99 and 97%. Comparison with the commercial anti-stripping agent ALKAZINE O_{TM} at 1%, shows that such commercial anti-stripping agent was not as effective as the sewage sludge-derived oil fractions.

### EXAMPLE 3

Static immersion stripping tests were carried out using a blend of Petro Canada, Gulf and Shell 85/100 asphalts with different blending agents, namely two kinds of sewage sludge-derived oil, ALKAZINE O_{TM}, REDICOTE AP_{TM} and REDICOTE 82-S_{TM}. vs. retained coating.

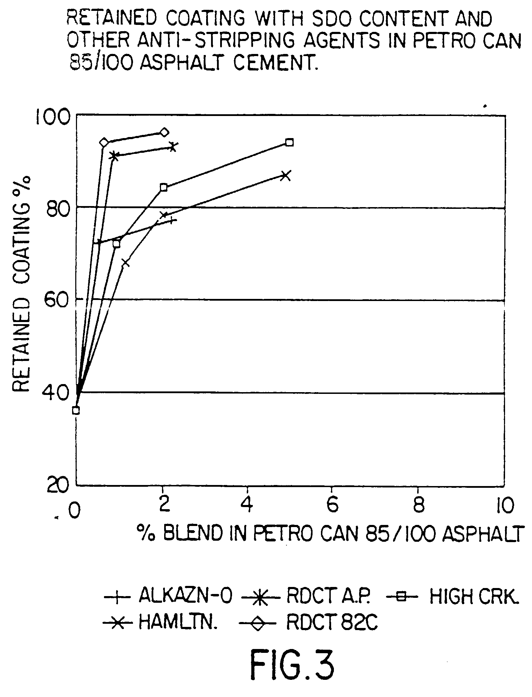

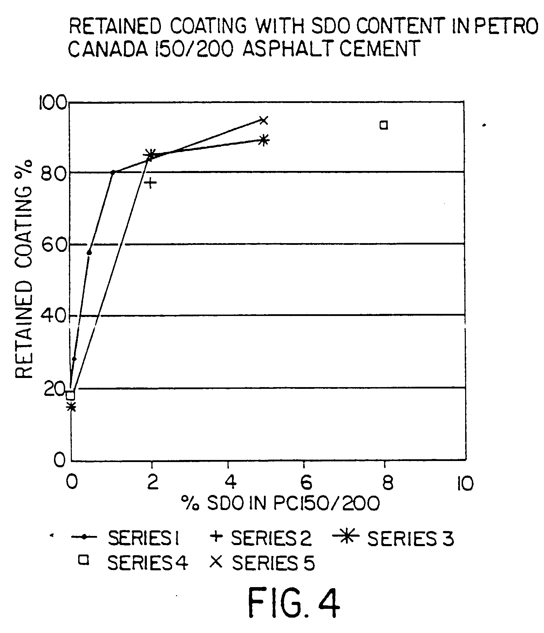

The results are summarized in Table 9 and in Figure 3.

**TABLE 9**

| Stripping by Immersion Test | |
|---|---|
| Asphalt Blend | Retained Coating (%) |
| Gulf 85/100 0% SDO | 58 |
| 1% SDO+250C | 80 |
| 5% SDO+250C | 93 |
| 17% SDO+400C | 96 |
| | |
| Shell 85/100 0% SDO | 58 |
| 1% SDO +250C | 90 |
| 5% SDO +250C | 97 |
| SDO = sewage sludge-derived oil | |

As seen in Figure 3, +150°C sewage sludge-derived oil, from Hamilton, Ontario and from Highland Creek, Ontario, i.e., from different sources, is compared with several commercial synthetic anti-stripping agents. These sewage sludge-derived oil samples had lower nitrogen contents and consequently were not quite as effective as the Atlanta, Georgia sewage sludge-derived oil of the previous tests.

### EXAMPLE 4

Retained coating tests were carried out on asphaltic compositions of Petro Canada 150/200 asphalt cement, Jaimeson aggregate and five evaluations using +150°C sewage sludge-derived oil. More complete data and other commercial asphalt cement blends with both sewage sludge-derived oil and other anti-stripping agent is shown on the next pages in Tables 10 and 11.

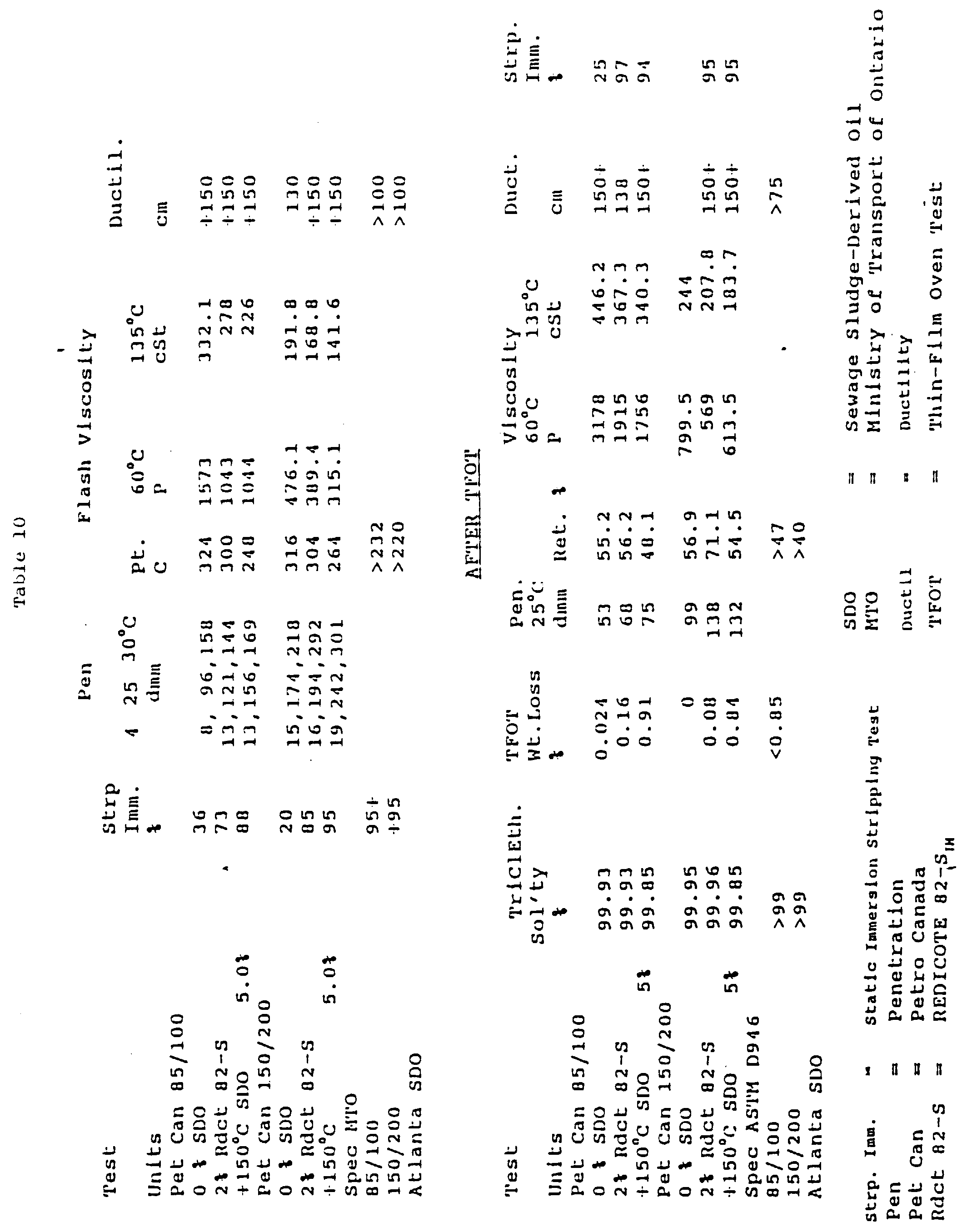

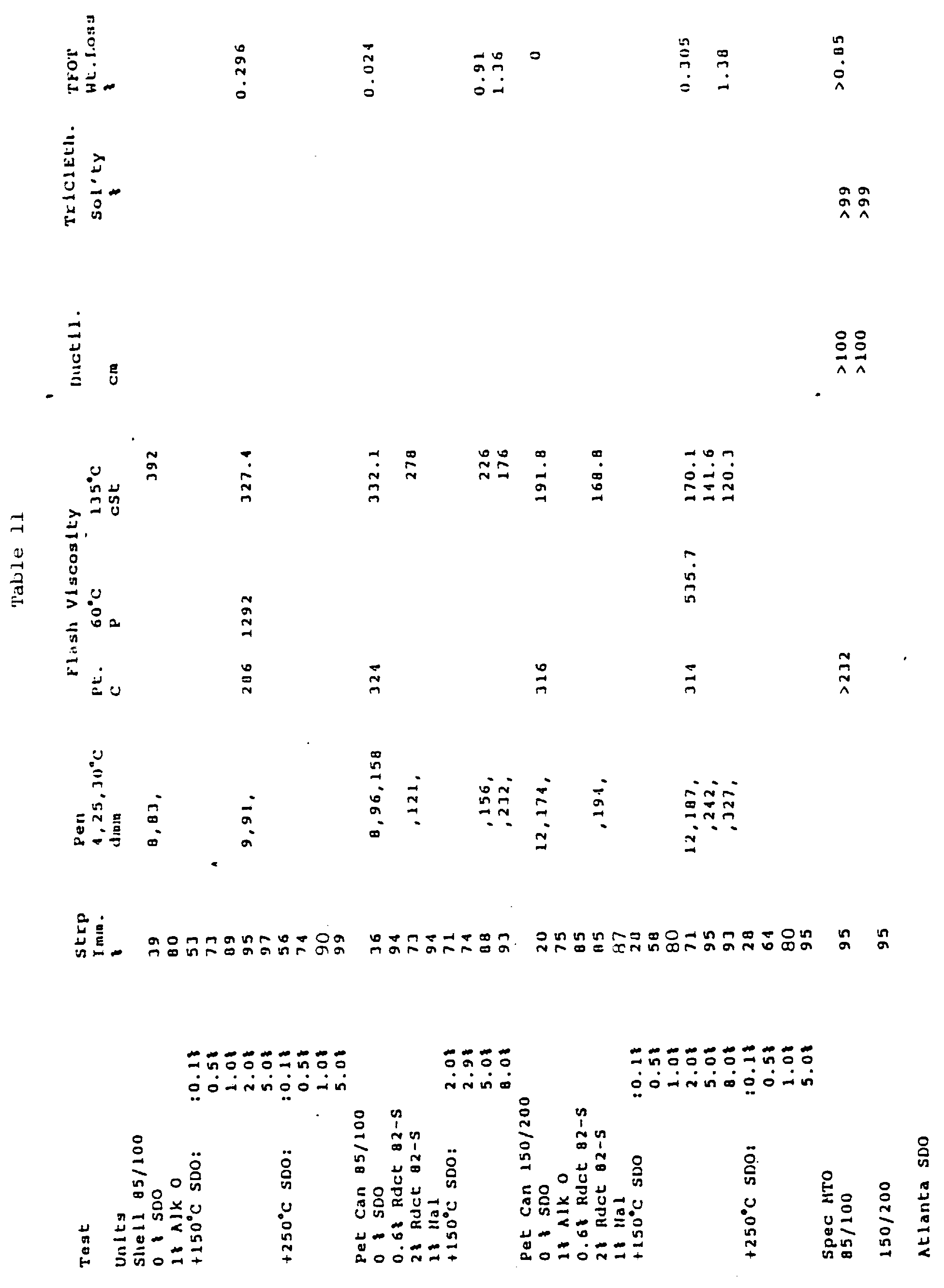

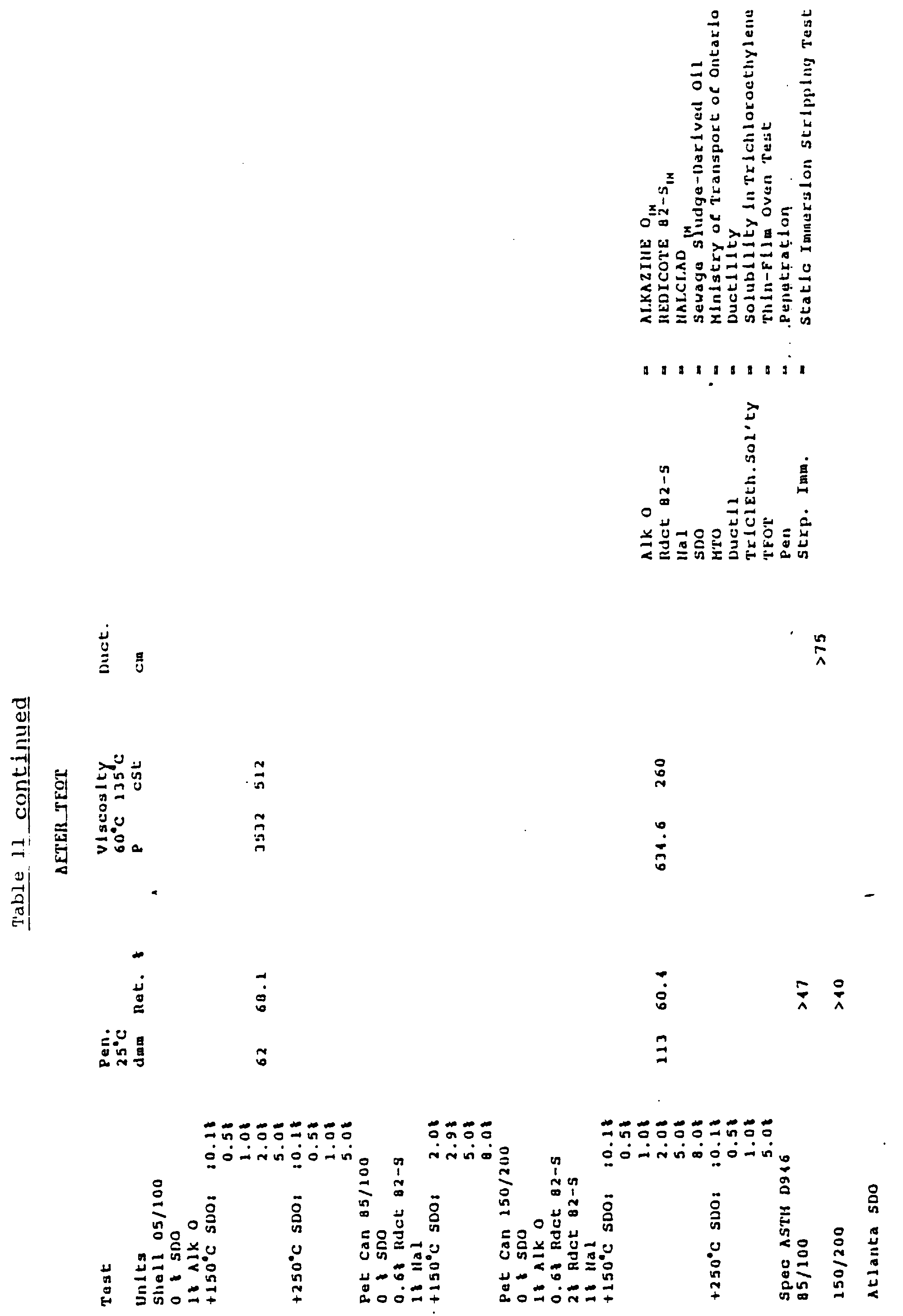

As seen in these tables, the addition of anti-stripping agents to asphalt, since they are generally of much lower viscosity than the asphalt, increases the penetration. This might have the advantage of allowing the use of somewhat harder asphalt but is disadvantagous for softer asphalts that are near the limits of penetration and viscosity specifications.

There appears to be no problem with meeting flash point requirements even for the +150°C sewage sludge-derived oil up to the 5% addition level for the 85/100 and 150/200 asphalts.

### EXAMPLE 5

The sewage sludge-derived oil addition up to the 5% level does not appear to lower the ductilities of the asphalt. In fact, in one case, it even improved it even after the Thin-Film Oven Test, as shown in Tables 9 and 10.

### EXAMPLE 6

The compatibility of sewage-sludge derived oil with heavy residual materials has been assessed. Sewage sludge-derived oil was added to high conversion hydro-cracking pitch (S.P.111°C) and to ROSE_{TM} residue (S.P.158°C) in equal proportions, heated until liquid and thoroughly mixed.

A description of the characteristics of the above-referred-to CANMET hydrocracking pitch is as follows:

Very heavy material. Typically 50 - 80% Asphaltenes.

Asphaltene content varies with the feedstock and the conversion rate selected for the process. (See U.S. Patent No. 4,683,005 July 28, 1987 M. A. Poirier).

A description of the characteristics of the above-referred-to ROSE_{TM} residue is as follows:

Residuum Oil Supercritical Extraction (ROSE_{TM}) process by the phenomena of super critical solubility separates asphaltenes from heavy oil residues using normal butane solvent. The characteristics of the pitch will vary according to the feed stock used and solvent. The ROSE_{TM} residue had a softening point of 158°C but typically very high in asphaltenes: R & B softening Pt. 80-100°C

| | |
|---|---|
| Viscosities | 200-400 cSt @ 200°C |
| Nickel & Vanadium | 100-300 wppm (high) |

An aged Athabascan asphaltene fraction was similarly treated with twice its weight of sewage sludge-derived oil.

In the case of the hydrocracking pitch and the ROSE_{TM} residue blends, the materials appeared to dissolve completely in the sewage sludge-derived oil. In the case of the asphaltenes, there appeared to be only a very small portion of skin-like material that did not dissolve in the sewage sludge-derived oil. This small amount of insoluble material probably was due to oxidation of the asphaltene fraction on ageing.

The mixtures were very viscous, on cooling, but no phase separation could be detected, even after several months.

### Industrial Applicability

The sewage sludge-derived oils have been shown to be desirable asphalt additives. Since asphalt has industrial applicability in paving of roads, the industrial applicability of the present invention resides in the improvement of asphalt paving materials by improvements in anti-stripping and adhesion characteristics.

It is believed that the sewage sludge-derived oil has an affinity for heavy asphaltic materials, and they are considered to be peptizing agents for the asphaltenic miscible fractions in asphalt.

It is further believed that the asphalt compositions of this invention may be used as a coating for water-proofing wood, concrete, organic cloth or fibres, steel articles and soil. The sewage sludge-derived oil would be expected to improve adhesion.

## Claims

1. A bituminous coating composition including an asphalt, a bitumen asphalt or a crude residuum containing asphaltenes, and an amount of from 0.1% to 8% by weight, of a nitrogen-containing, adhesion-improving, anti-stripping agent, characterised in that said agent is a sewage sludge-derived oil, or a fraction thereof, said sewage sludge-derived oil comprising a mixture of saturated aliphatic hydrocarbons, monoaromatic hydrocarbons, diaromatic hydrocarbons, polyaromatic hydrocarbons, polar compounds and basic, pyridine-soluble compounds having the following elemental composition, in per cent by weight.
| | |
|---|---|
| Nitrogen | 2 - 8% |
| Oxygen | 3 - 12% |
| Sulphur | 0.1 - 4% |
| Hydrogen | 9 - 11% |
| Carbon | 65 -89.9% |

2. A bituminous paving composition including aggregate, an asphalt, a bitumen asphalt or a crude residuum containing asphaltenes, and an amount of from 0.1% to 8% by weight, of a nitrogen-containing, adhesion-improving anti-stripping agent, characterised in that said agent is a sewage sludge-derived oil, or a fraction thereof, said sewage sludge-derived oil comprising a mixture of saturated aliphatic hydrocarbons, monoaromatic hydrocarbons, diaromatic hydrocarbons, polyaromatic hydrocarbons, polar compounds and basic, pyridine-soluble compounds, having the following elemental composition, in per cent by weight:
| | |
|---|---|
| Nitrogen | 2 - 8% |
| Oxygen | 3 - 12% |
| Sulphur | 0.1 - 4% |
| Hydrogen | 8 - 11% |
| Carbon | 65 - 86.9% |

3. An asphalt composition including an asphaltic cement, and an amount of from 0.1% to 8% by weight, of a nitrogen-containing, adhesion-improving, anti-stripping agent characterised in that said agent is a sewage sludge-derived oil, or a fraction thereof, said sewage sludge-derived oil comprising a mixture of saturated aliphatic hydrocarbons, monoaromatic hydrocarbons, diaromatic hydrocarbons, polyaromatic hydrocarbons, polar compounds and basic, pyridine-soluble compounds, having the following elemental composition, in per cent by weight:
| | |
|---|---|
| Nitrogen | 2 - 8% |
| Oxygen | 3 - 12% |
| Sulphur | 0.1 - 4% |
| Hydrogen | 8 - 11% |
| Carbon | 65 - 86.9% |

4. The compositions of any one of claims 1, 2 or 3 characterised in that said sewage sludge-derived oil has the following elemental composition, in per cent by weight:
| | |
|---|---|
| Nitrogen | 3.4 - 5% |
| Oxygen | 5.8 - 6.9% |
| Sulphur | 0.3 - 0.8% |
| Hydrogen | 9.7 - 10.4% |
| Carbon | 76.9 - 79.8% |

5. The coating composition of claims 1, 2 or 3 characterised in that said sewage sludge-derived oil has the following elemental composition, in per cent by weight:
| | |
|---|---|
| Nitrogen | 3.42 - 4.95% |
| Oxygen | 5.84 - 6.89% |
| Sulphur | 0.34 - 0.83% |
| Hydrogen | 9.7 - 10.44% |
| Carbon | 76.92 - 79.76% |

6. The composition of any one of claims 1-5 inclusive characterised in that said effective amount of said nitrogen-containing, adhesion-improving, anti-stripping agent is from 1% to 5% by weight.

## Patentansprüche

1. Bituminöse Beschichtungsmasse, enthaltend einen Asphalt, einen Bitumenasphalt oder einen Asphaltene enthaltenden Rohöl-Raffinationsrückstand und 0,1 bis 8 Gew.-% eines stickstoffhaltigen Haftfestigkeitsverbesserers, dadurch gekennzeichnet, daß es sich bei dem Haftfestigkeitsverbesserer um ein aus Klärschlamm gewonnenes Öl oder eine Fraktion davon handelt, wobei das aus Klärschlamm gewonnene Öl ein Gemisch aus gesättigten aliphatischen Kohlenwasserstoffen, monoaromatischen Kohlenwasserstoffen, diaromatischen Kohlenwasserstoffen, polyaromatischen Kohlenwasserstoffen, polaren Verbindungen und basischen, in Pyridin löslichen Verbindungen mit der folgenden chemischen Elementarzusammensetzung darstellt:
| | |
|---|---|
| Stickstoff | 2 - 8 Gew.-% |
| Sauerstoff | 3 - 12 Gew.-% |
| Schwefel | 0,1 - 4 Gew.-% |
| Wasserstoff | 9 - 11 Gew.-% |
| Kohlenstoff | 65 - 89,9 Gew.-%. |

2. Bituminöse Straßenbaumasse, enthaltend Zuschlag, einen Asphalt, einen Bitumenasphalt oder einen Asphaltene enthaltenden Rohöl-Raffinationsrückstand und 0,1 bis 8 Gew.-% eines stickstoffhaltigen Haftfestigkeitsverbesserers, dadurch gekennzeichnet, daß es sich bei dem Haftfestigkeitsverbesserer um ein aus Klärschlamm gewonnenes Öl oder eine Fraktion davon handelt, wobei das aus Klärschlamm gewonnene Öl ein Gemisch aus gesättigten aliphatischen Kohlenwasserstoffen, monoaromatischen Kohlenwasserstoffen, diaromatischen Kohlenwasserstoffen, polyaromatischen Kohlenwasserstoffen, polaren Verbindungen und basischen, in Pyridin löslichen Verbindungen mit der folgenden chemischen Elementarzusammensetzung darstellt:
| | |
|---|---|
| Stickstoff | 2 - 8 Gew.-% |
| Sauerstoff | 3 - 12 Gew.-% |
| Schwefel | 0,1 - 4 Gew.-% |
| Wasserstoff | 8 - 11 Gew.-% |
| Kohlenstoff | 65 - 86,9 Gew.-%. |

3. Asphaltmasse, enthaltend einen Asphaltzement und 0,1 bis 8 Gew.-% eines stickstoffhaltigen Haftfestigkeitsverbesserers, dadurch gekennzeichnet, daß es sich bei dem Haftfestigkeitsverbesserer um ein aus Klärschlamm gewonnenes Öl oder eine Fraktion davon handelt, wobei das aus Klärschlamm gewonnene Öl ein Gemisch aus gesättigten aliphatischen Kohlenwasserstoffen, monoaromatischen Kohlenwasserstoffen, diaromatischen Kohlenwasserstoffen, polyaromatischen Kohlenwasserstoffen, polaren Verbindungen und basischen, in Pyridin löslichen Verbindungen mit der folgenden chemischen Elementarzusammensetzung darstellt:
| | |
|---|---|
| Stickstoff | 2 - 8 Gew.-% |
| Sauerstoff | 3 - 12 Gew.-% |
| Schwefel | 0,1 - 4 Gew.-% |
| Wasserstoff | 8 - 11 Gew.-% |
| Kohlenstoff | 65 - 86,9 Gew.-%. |

4. Massen nach einem der Ansprüche 1, 2 oder 3, dadurch gekennzeichnet, daß das aus Klärschlamm gewonnene Öl die folgende chemische Elementarzusammensetzung hat:
| | |
|---|---|
| Stickstoff | 3,4 - 5 Gew.-% |
| Sauerstoff | 5,8 - 6,9 Gew.-% |
| Schwefel | 0,3 - 0,8 Gew.-% |
| Wasserstoff | 9,7 - 10,4 Gew.-% |
| Kohlenstoff | 76,9 - 79,8 Gew.-%. |

5. Beschichtungsmasse nach einem der Ansprüche 1, 2 oder 3, dadurch gekennzeichnet, daß das aus Klärschlamm gewonnene Öl die folgende chemische Elementarzusammensetzung hat:

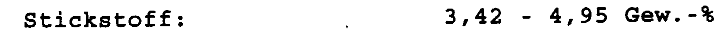

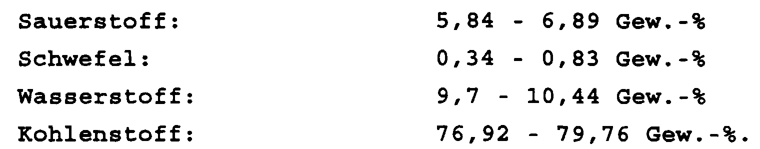

6. Masse nach einem der Ansprüche 1 bis einschließlich 5, dadurch gekennzeichnet, daß die wirksame Menge des stickstoffhaltigen Haftfestigkeitsverbesserers 1 bis 5 Gew.-% beträgt.

## Revendications

1. Composition bitumineuse de revêtement incluant un asphalte, un asphalte de bitume ou un résidu brut contenant des asphaltènes, et une quantité allant de 0,1 % à 8 % en poids, d'un agent anti-strippage, améliorant l'adhésion, contenant de l'azote, caractérisée en ce que ledit agent est une huile dérivée de boues d'eaux d'égouts, ou une fraction de celle-ci, ladite huile dérivée de boues d'eaux d'égouts comprenant un mélange d'hydrocarbures aliphatiques saturés, d'hydrocarbures mono-aromatiques, d'hydrocarbures diaromatiques, d'hydrocarbures polyaromatiques, de composés polaires et de composés basiques, solubles dans la pyridine ayant la composition élémentaire suivante, en pour cent en poids.
| | |
|---|---|
| Azote | 2 - 8 % |
| Oxygène | 3 - 12 % |
| Soufre | 0,1 - 4 % |
| Hydrogène | 9 - 11 % |
| Carbone | 65 - 89,9 % |

2. Composition bitumineuse de pavage incluant de l'agrégat, un asphalte, un asphalte de bitume ou un résidu brut contenant des asphaltènes, et une quantité allant de 0,1 % à 8 % en poids, d'un agent anti-strippage, améliorant l'adhésion, contenant de l'azote, caractérisée en ce que ledit agent est une huile dérivée de boues d'eaux d'égouts, ou une fraction de celle-ci, ladite huile dérivée de boues d'eaux d'égouts comprenant un mélange d'hydrocarbures aliphatiques saturés, d'hydrocarbures mono-aromatiques, d'hydrocarbures diaromatiques, d'hydrocarbures polyaromatiques, de composés polaires et de composés basiques, solubles dans la pyridine ayant la composition élémentaire suivante, en pour cent en poids:
| | |
|---|---|
| Azote | 2 - 8 % |
| Oxygène | 3 - 12 % |
| Soufre | 0,1 - 4 % |
| Hydrogène | 8 - 11 % |
| Carbone | 65 - 86,9 % |

3. Composition d'asphalte incluant un ciment asphaltique et une quantité allant de 0,1 % à 8 % en poids d'un agent anti-strippage, améliorant l'adhésion, contenant de l'azote, caractérisée en ce que ledit agent est une huile dérivée de boues d'eaux d'égouts, ou une fraction de celle-ci, ladite huile dérivée de boues d'eaux d'égouts comprenant un mélange d'hydrocarbures aliphatiques saturés, d'hydrocarbures mono-aromatiques, d'hydrocarbures diaromatiques, d'hydrocarbures polyaromatiques, de composés polaires et de composés basiques, solubles dans la pyridine ayant la composition élémentaire suivante, en pour cent en poids:
| | |
|---|---|
| Azote | 2 - 8 % |
| Oxygène | 3 - 12 % |
| Soufre | 0,1 - 4 % |
| Hydrogène | 8 - 11 % |
| Carbone | 65 - 86,9 % |

4. Compositions de l'une quelconque des revendications 1, 2, ou 3, caractérisées en ce que ladite huile dérivée de boues d'eaux d'égouts a la composition élémentaire suivante, en pour cent en poids:
| | |
|---|---|
| Azote | 3,4 - 5 % |
| Oxygène | 5,8 - 6,9 % |
| Soufre | 0,3 - 0,8 % |
| Hydrogène | 9,7 - 10,4 % |
| Carbone | 76,9 - 79,8 % |

5. Composition de revêtement des revendications 1, 2, ou 3, caractérisée en ce que ladite huile dérivée de boues d'eaux d'égouts a la composition élémentaire suivante, en pour cent en poids:

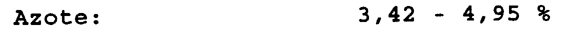

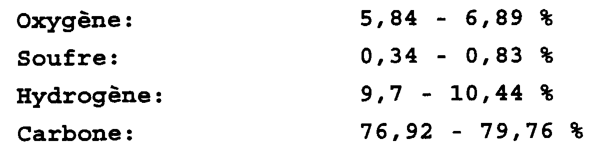

6. Composition de l'une quelconque des revendications 1-5 inclues, caractérisée en ce que ladite quantité effective dudit agent anti-strippage, améliorant l'adhésion, contenant de l'azote va de 1 % à 5 % en poids.
